# EUROPEAN PATENT SPECIFICATION

(11) **EP 1 817 614 B1**
(45) Date of publication and mention of the grant of the patent: **07.05.2008**
(21) Application number: 05817736.1
(22) Date of filing: 21.11.2005
(51) Int. Cl.: G02B 3/14

(54) **SWITCHABLE OPTICAL ELEMENT**
SCHALTBARES OPTISCHES ELEMENT
ELEMENT OPTIQUE COMMUTABLE

(30) Priority: 25.11.2004 EP 04106089
(43) Date of publication of application: 15.08.2007
(73) Proprietor: Koninklijke Philips Electronics N.V., 5621 BA Eindhoven (NL)
(72) Inventor: TUKKER, Teunis, W., NL-5656 AA Eindhoven (NL); HENDRIKS, Bernardus, H., W., NL-5656 AA Eindhoven (NL); KUIPER, Stein, NL-5656 AA Eindhoven (NL); VREHEN, Joris, J., NL-5656 AA Eindhoven (NL); JUTTE, Petrus, T., NL-5656 AA Eindhoven (NL)
(74) Representative: Uittenbogaard, Frank
(86) International application number: PCT/IB2005/053828
(87) International publication number: WO 2006/056922

(56) References cited:
- EP-A- 1 069 450
- WO-A-00/58763
- WO-A-03/069380
- WO-A-20/04027490
- WO-A-20/04051323

## Description

### FIELD OF THE INVENTION

The present invention relates to a switchable optical element, particularly, but not exclusively, suitable for use in an optical scanning device for scanning an information layer of an optical record carrier; and to an optical scanning device including such an element.

### BACKGROUND OF THE INVENTION

Switchable optical elements which have different states for introducing different wavefront modifications into radiation beams are known. Switching the optical element between different states changes the wavefront modification introduced into a radiation beam when passing through the optical element.

International patent application WO 04/027490 describes a switchable optical element which has two different states. The element has a chamber, which is filled with one fluid in one state and is filled with a different fluid in the other state. A wavefront modifier modifies a wavefront of a radiation beam passing through the chamber. The wavefront modification of the radiation beam depends upon both the state, which the optical element is switched into, and a wavelength of the radiation beam.

The switchable optical element disclosed in WO 04/027490 is included within an optical scanning device for scanning the information layer of different formats of optical record carriers, for example a Compact Disc (CD), a conventional Digital Versatile Disc (DVD) and a Blu-Ray™ Disc (BD). The wavelength of the radiation beam used to scan the record carriers is different for the different formats. Each format has a cover layer lying between the information layer and an exterior of the record carrier, which has a different thickness. By switching between different states of the switchable optical element these different thicknesses are accommodated so that the different formats of record carrier can be scanned correctly.

The variety of wavefront modifications which can be introduced into a radiation beam by the switchable optical element is relatively limited by the element's construction. Furthermore, the switchable optical element does not provide a functionality, which allows an optical scanning device to scan optical record carriers having multiple information layers. The element is relatively bulky as the element has a conduit, lying outside of an optically operative area, which is filled with one fluid whilst the other fluid fills the chamber.

International patent application WO 03/069380 discloses a variable focus lens having a meniscus, which separates two fluids. The fluid meniscus has a curvature, which introduces a focus into a radiation beam passing through the meniscus. Application of a voltage to electrodes of the lens varies a curvature of the meniscus in order to vary the focus of the radiation beam. An optical scanning device is disclosed which includes the variable focus lens and which can scan different information layers of a record carrier by varying the focus of the lens.

International patent application WO 04/051323 discloses apparatus for forming variable fluid meniscus configurations. The apparatus comprises a fluid meniscus, which separates two fluids. By applying different patterns of voltages to a configuration of electrodes surrounding the meniscus, different configurations of the meniscus can be obtained. In one embodiment, a radiation beam passes through a transparent electrode and is reflected by the fluid meniscus, which has a planar configuration, through a further transparent wall of the apparatus. In a different embodiment, the pattern of voltages applied to the electrodes causes the meniscus to adopt an asymmetric curvature, which introduces an applied focus into a radiation beam passing through the meniscus. Variation of the voltages causes the curvature of the meniscus to change.

### SUMMARY OF THE INVENTION

It is an object of the present invention to provide a switchable optical element, which introduces different wavefront modifications into a radiation beam in a relatively efficient manner.

In accordance with one aspect of the present invention, there is provided a switchable optical element having an optical path for a radiation beam and having a first state and a second state, said element comprising:
a) a first fluid and a second, different, fluid which are immiscible and which are separated from each other by a fluid meniscus;
b) a first, transparent, wall part and a second, transparent, wall part spaced from each other along the optical path; and
c) a fluid switching system which is arranged to apply forces to said first and/or said second fluid in order to switch said element between said first and said second state,
wherein the first wall part includes a non-planar wavefront modifier, and wherein the fluid switching system is arranged to apply said forces so that:
when the element is in the first state, said first wall part is covered by the first fluid; and
when the element is in the second state, said first wall part is covered by the second fluid,
characterised in that when the element is in the first state said second wall part is covered by the second fluid, and when the element is in the second state said second wall part is covered by the first fluid, wherein in both the first state and the second state at least part of said fluid meniscus is located on the optical path.

When a radiation beam passes along the optical path the switchable optical element, when in the first state, introduces a desired wavefront modification into the radiation beam. By switching the element to the second state a different, desired, wavefront modification can be introduced into a radiation beam. The form of each introduced wavefront modification depends upon factors including: a wavelength of the radiation beam, a material of the first fluid and of the second fluid, a structure and a material of the non-planar wavefront modifier, and whether the first and the second wall parts are covered by the first or the second fluid. Each of these factors provides a degree of freedom to a designer designing the switchable optical element to introduce particular wavefront modifications into different radiation beams.

With the fluid meniscus being located on the optical path when the element is in the first state and the second state, the first fluid and the second fluid are both located on the optical path. Switching between the first and the second states causes the two fluids to change places within the element so that they cover different of the first and second wall parts. It is therefore possible to switch between different forms of introduced wavefront modifications. The fluid meniscus may at least partially contribute to the form of an introduced wavefront modification in dependence on a configuration of the meniscus and/or on the materials of the first and the second fluids. In this way a further degree of design freedom is provided.

As a result of these different degrees of design freedom, the switchable optical element of the present invention has a relatively high level of customisation so that a relatively large variety of different and desired wavefront modifications can be introduced into at least one radiation beam and the wavefront modification can be changed simply by switching the state of the element or by changing a characteristic of the radiation beam, such as a wavelength. This is advantageous as the element can be designed and constructed to meet a relatively wide range of criteria required by optical applications needing to introduce a wavefront modification into a radiation beam.

In accordance with a further preferred embodiment of the present invention, when the element is in at least one of the first and the second state, said fluid meniscus is capable of being arranged to focus a radiation beam travelling along the optical path.

With the fluid meniscus being capable of focusing a radiation beam travelling along the optical path, a wavefront modification can be introduced such that a radiation beam is focused as a spot onto a desired position. This allows the switchable optical element to be used in optical applications where it is desirable to focus a radiation beam onto a desired position.

Preferably, in accordance with an embodiment of the present invention, when said element is in at least one of the first and the second state, said fluid meniscus has a curvature which determines an amount of said focus and said element comprises a variable focus system capable of varying the curvature of the fluid meniscus.

Variation of the curvature of the fluid meniscus allows the focus of the radiation beam to be varied in a relatively efficient and controlled manner. This, consequently, allows the switchable optical element to be used in optical applications where it is desirable to vary the position, which a radiation beam is focused onto.

In a preferred embodiment of the present invention, said fluid switching system includes a first and a second switching electrode, wherein
said fluid switching system is arranged to apply a voltage to said first switching electrode in order to switch said element to said first state, and wherein
said fluid switching system is arranged to apply a voltage to said second switching electrode in order to switch said element to said second state.

Application of a voltage to different electrodes in order to switch the state of the element allows the switching to be performed in a relatively rapid and efficient manner. This minimises any delay between the introduction of one wavefront modification and the introduction of a different wavefront modification into a radiation beam.

In a further preferred embodiment of the present invention said optical element includes a further electrode, wherein
when switching between the first state and the second state, said fluid switching system is arranged to apply a voltage to said further electrode, and wherein
when varying the curvature of the fluid meniscus, said variable focus system is arranged to apply a voltage to said further electrode.

Application of a voltage to the further electrode when switching between the first and the second state changes the positions of the first and the second fluids within the element in a relatively rapid manner such that the switching of the element is relatively efficient.

Preferably, in an embodiment of the present invention said non-planar wavefront modifier includes at least one of: an aspherical lens; a phase structure having a periodic profile; and a phase structure having a non-periodic profile.

Selection of a specific structure of the non-planar wavefront modifier allows a desired wavefront modification to be introduced into a radiation beam travelling along the optical path. In the case where the wavefront modifier includes more than one different type of wavefront modifier, different forms of wavefront modifications can be introduced into radiation beams having different predetermined wavelengths.

In a preferred embodiment of the present invention, said first fluid has a first refractive index and said second fluid has a second, different, refractive index, wherein said non-planar wavefront modifier is formed of a material having a refractive index which is approximately the same as said second refractive index.

With the material of the non-planar wavefront modifier having the same refractive index as that of the second fluid, and when the element is in the second state with the second wall part covered by the first fluid, the wavefront modifier introduces a zero wavefront modification in a radiation beam passing along the optical path. In this way a functionality of the wavefront modifier, and therefore the introduction of a wavefront modification into the radiation beam, can be switched on and off by switching between the states of the switchable optical element.

According to a further aspect of the present invention, there is provided an optical scanning device for scanning a record carrier having an information layer, wherein said optical scanning device comprises:
a) a switchable optical element in accordance with the invention;
b) a radiation beam source system arranged to provide a radiation beam having a predetermined wavelength;
c) an objective lens system arranged to focus said provided radiation beam to a scanning spot on said information layer; and
d) a detection system arranged to detect the radiation beam after scanning of the information layer and to convert radiation of the detected radiation beam into electrical signals.

The switchable optical element included in the optical scanning device is adapted to introduce a wavefront modification into a radiation beam for scanning a record carrier in a relatively accurate manner. Furthermore, with suitable adaptation of the switchable optical element, the optical scanning device can scan optical record carriers of different formats and/or comprising a plurality of information layers in a relatively accurate manner.

Further features and advantages of the invention will become apparent from the following description of preferred embodiments of the invention, given by way of example only, which is made with reference to the accompanying drawings.

### BRIEF DESCRIPTION OF THE DRAWINGS

Figure 1 shows schematically a cross section of a switchable optical element in a first state in accordance with an embodiment of the present invention.
Figure 2 shows schematically a cross section of the switchable optical element, in accordance with an embodiment of the present invention.
Figure 3 shows schematically a cross section of the switchable optical element in an intermediate state in accordance with an embodiment of the present invention.
Figure 4 shows schematically a cross section of the switchable optical element in a second state in accordance with an embodiment of the present invention.
Figure 5 shows schematically a cross section of a switchable optical element in a first state in accordance with a different embodiment of the present invention.
Figure 6 shows schematically a cross section of the switchable optical element, in accordance with the different embodiment of the present invention.
Figure 7 shows schematically a cross section of the switchable optical element in an intermediate state in accordance with the different embodiment of the present invention.
Figure 8 shows schematically an optical scanning device in accordance with an embodiment of the present invention.

### DETAILED DESCRIPTION OF THE INVENTION

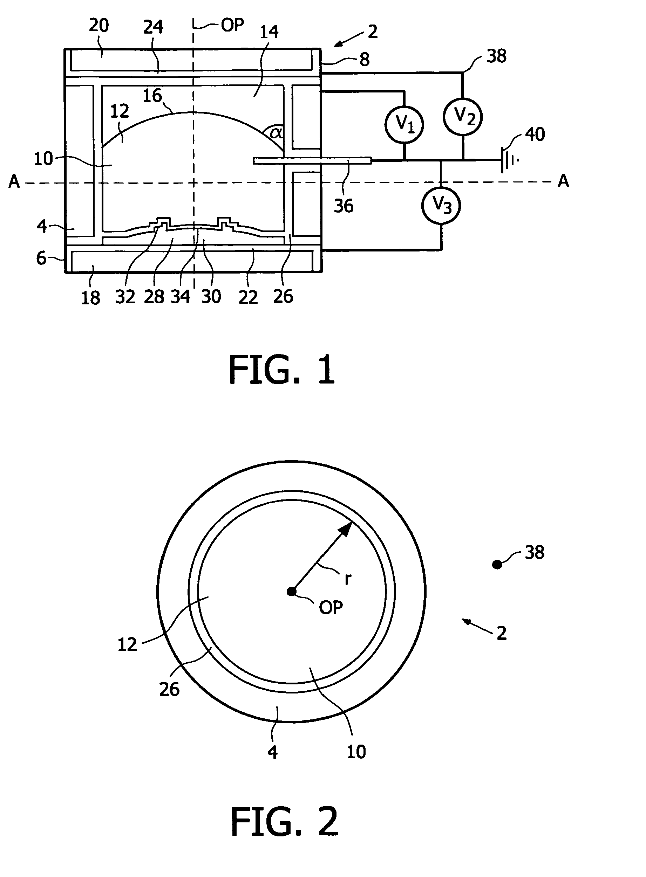

Figure 1 shows schematically a cross section of a switchable optical element 2 in accordance with a first embodiment of the present invention. Figure 2 shows schematically a cross section of the element 2 taken along the line A---A indicated in Figure 1. The element 2 comprises a cylindrical electrode 4 having a longitudinal axis, which is coincident with an optical path OP of the element 2. A first end of the cylindrical electrode 4 is covered by a first wall 6 and a second end of the cylindrical electrode 4 is covered by a second wall 8. The first wall 6, the second wall 8 and the cylindrical electrode 4 define a cylindrical chamber 10 which encloses a first fluid 12 and a second, different, fluid 14 which are immiscible with each other. A fluid meniscus 16 separates the first fluid 12 from the second fluid 14 and is located at least partly on the optical path OP. In this embodiment the meniscus 16 is centred about the optical path OP. The chamber 10 has a radius r taken perpendicular from the optical path OP.

In this embodiment the first fluid 12 is an electrically conductive liquid with a first refractive index, for instance a solution of potassium chloride (KCI) in water having a concentration of 0.1 M and a refractive index of 1.34, and the second fluid 14 is an electrically insulative liquid with a second refractive index, for instance a copolymer of polyphenylmethylsiloxane and polydimethylsiloxane having a refractive index of 1.50. It is envisaged that the second fluid may alternatively be electrically conductive, but have a lower electrical conductivity than the first fluid 12.

The first wall 6 comprises a first plate 18 and the second wall 8 comprises a second plate 20. Each of the first and second plates 18, 20 are circular, planar, centred about the optical path OP, and formed of a transparent material which, in this example, is glass. A first switching electrode 22 lies in contact with both a surface of the first plate 18, which faces towards the chamber 10, and a peripheral surface of the first plate 18. The first switching electrode 22 is circular, has a U-shaped cross section, is centred about the optical path OP and is formed of a transparent and electrically conductive material which, in this example, is indium tin oxide (ITO). A second switching electrode 24 lies in contact with both a surface of the second plate 20 which faces towards the chamber 10 and with a peripheral surface of the second plate 20. The second switching electrode 24 is circular, has a U-shaped cross section, is centred about the optical path OP and is formed of a transparent and electrically conductive material which, in this example, is indium tin oxide (ITO). A hydrophobic layer 26 which is electrically insulative and transparent, coats a surface of the second switching electrode 24 which faces towards the chamber 10. The hydrophobic layer 26 also coats an inner surface of the cylindrical electrode 4 and separates and insulates the first and the second switching electrodes 22, 24 from end surfaces of the cylindrical electrode 4. In this example the hydrophobic layer 26 is formed of Teflon^{™} AF 1600 produced by Dupont^{™}_{.}

A part of the first wall 6 and a part of the second wall 8 are transparent and are spaced from each other along the optical path OP. The first wall part and the second wall part each have a radius, in a direction perpendicular the optical path OP, which is the same as the radius r of the chamber 10. The first wall part and the second wall part each have a thickness, in a direction parallel the optical path OP, which is the same as a thickness, taken in the same direction, of the first wall 6 and the second wall 8, respectively.

The first wall part includes a non-planar wavefront modifier 28, which includes at least one of an aspherical lens; a phase structure having a periodic profile; and a phase structure having a non-periodic profile. In this embodiment the non-planar wavefront modifier 28 is an aspherical lens 30, which includes a non-periodic phase structure (NPS) 32. The NPS 32 is an annular phase structure comprising a plurality of annular protrusions, which have a non-periodic profile. The NPS 32 is formed within a surface of the aspherical lens 30. A surface of the aspherical lens 30 and a surface of the NPS 32 constitute a wavefront modifier surface 34 of the first wall part which is coated with the hydrophobic layer 26. The wavefront modifier 28 is mounted on a portion of the first switching electrode and is centred about the optical path OP such that the aspherical lens 30, which is circular, and the NPS 32, are centred about the optical path OP. The wavefront modifier 28 is constructed in accordance with specific dimensions such that a desired wavefront modification can be introduced by the wavefront modifier 28 into a radiation beam passing along the optical path OP. The dimensions of the wavefront modifier 28, as illustrated in Figure 1, are not shown according to scale and are not intended to indicate the specific dimensions of the wavefront modifier 28. In this embodiment the wavefront modifier 28 is formed of a material, which has approximately the same refractive index as the second refractive index, for example hexanediol diacrylate (HDDA) which has a refractive index, for a radiation beam having a predetermined wavelength of 408nm, of 1.51.

The element 2 comprises a ground electrode 36 which is inserted through an opening in the cylindrical electrode 4 and which lies in contact with the first fluid 12. The ground electrode 36 is electrically connected to a ground terminal 40. The hydrophobic layer 26 coats an inner surface of the opening in the cylindrical electrode 4 in order to insulate the ground electrode 36 from the cylindrical electrode 4.

The fluid meniscus 16 is capable of being arranged to focus a radiation beam travelling along the optical path OP. The fluid meniscus 16 has a curvature, which determines an amount of this focus. The curvature is rotationally symmetric about the optical path OP and is shown in Figure 1 as having a convex curvature when viewed from the second wall 8. The element 2 comprises a variable focus system (not indicated) which is capable of varying the curvature by applying electrowetting forces to the first and the second fluids 12, 14. The variable focus system comprises a first voltage source V₁ which is electrically connected to the cylindrical electrode 4 and to the ground terminal 40. Application of a voltage by the first voltage source V₁ to the cylindrical electrode 4 determines an extent of a contact angle α between the fluid meniscus 16 and a portion of the hydrophobic layer 26 which covers the inner surface of the cylindrical electrode 4. The extent of the contact angle α determines the curvature of the meniscus 16. Variation of the voltage applied by the first voltage source V₁ varies the extent of the contact angle α and consequently varies the curvature of the meniscus 16 such that convex, concave or planar curvatures may be obtained.

The element 2 comprises a fluid switching system (not indicated), which is arranged to apply electrowetting forces to the first and/or the second fluids 12, 14 in order to switch the element 2 between a first state and a second state. The first state and the second state will be described later in further detail. The fluid switching system comprises the first switching electrode 22, the second switching electrode 24, a second voltage source V₂ and a third voltage source V₃. The fluid switching system comprises an electrical connection system 38 which electrically connects the second voltage source V₂ to the second switching electrode 24 and to the ground terminal 40, and which electrically connects the third voltage source V₃ to the first switching electrode 22 and to the ground terminal 40. Figure 1 shows the element 2 in the first state where the first wall part, including the wavefront modifier 28, is covered by the first fluid 12 and the second wall part is covered by the second fluid 14. The fluid switching system applies electrowetting forces to the first and second fluids 12, 14 by application of an appropriate voltage from the third voltage source V₃ to the first switching electrode 22. In this first state, the second voltage source V₂ does not apply a voltage to the second switching electrode 24.

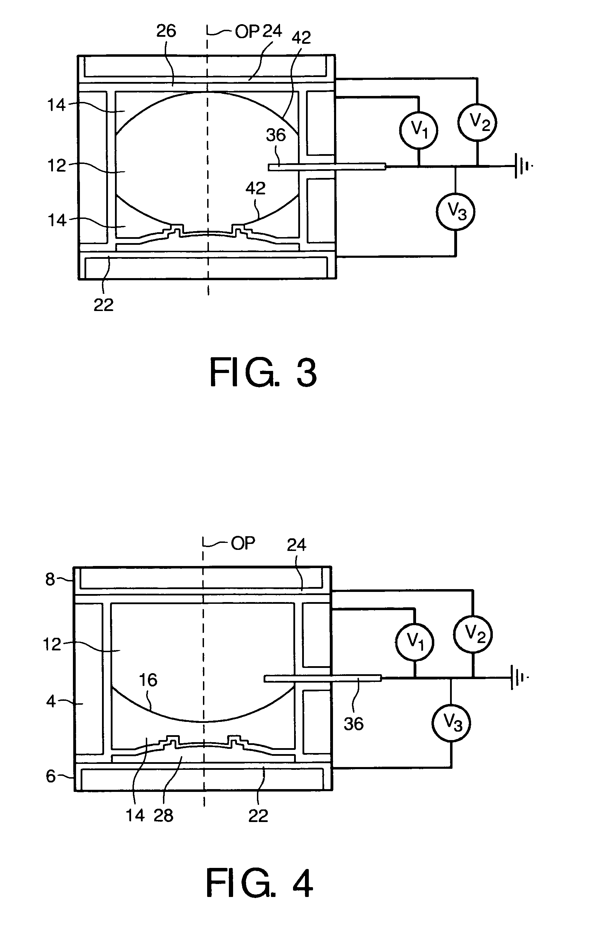

Figure 3 shows the element 2 in an intermediate state, which occurs during switching the element 2 between the first state and the second state. In this state, the second voltage source V₂ does not apply a voltage to the second switching electrode 24, the third voltage source V₃ does not apply a voltage to the first switching electrode 22 and the first voltage source V₁ does not apply a voltage to the cylindrical electrode 4. The first fluid 12 has a configuration, which minimises contact of the first fluid 12 with the hydrophobic layer 26. At least one further fluid meniscus 42, which is different to the fluid meniscus 16 described previously, maintains the separation of the first and the second fluids 12, 14 when the element 2 is in the intermediate state. In further embodiments of the present invention, when the element 2 is in the intermediate state, a voltage may also be applied by the second voltage source V₂ to the second switching electrode 24 in order to accelerate switching of the element from the first state to the second state. Similarly, when switching to the first state from the second state, the third voltage source V₃ may apply a voltage to the first switching electrode 22 when the element is in the intermediate state.

Figure 4 shows the element 2 in the second state where the first wall part, including the wavefront modifier 28, is covered by the second fluid 14 and the second wall part is covered by the first fluid 12. The fluid switching system applies electrowetting forces to the first and second fluids 12, 14 by application of an appropriate voltage from the second voltage source V₂ to the second switching electrode 24. In this second state, the third voltage source V₃ does not apply a voltage to the first switching electrode 22. In Figure 4 the fluid meniscus 16 is shown having a curvature, which is convex when viewed from the first wall 6. The first voltage source V₁ applies an appropriate voltage to the cylindrical electrode 4 in order to achieve this convex curvature.

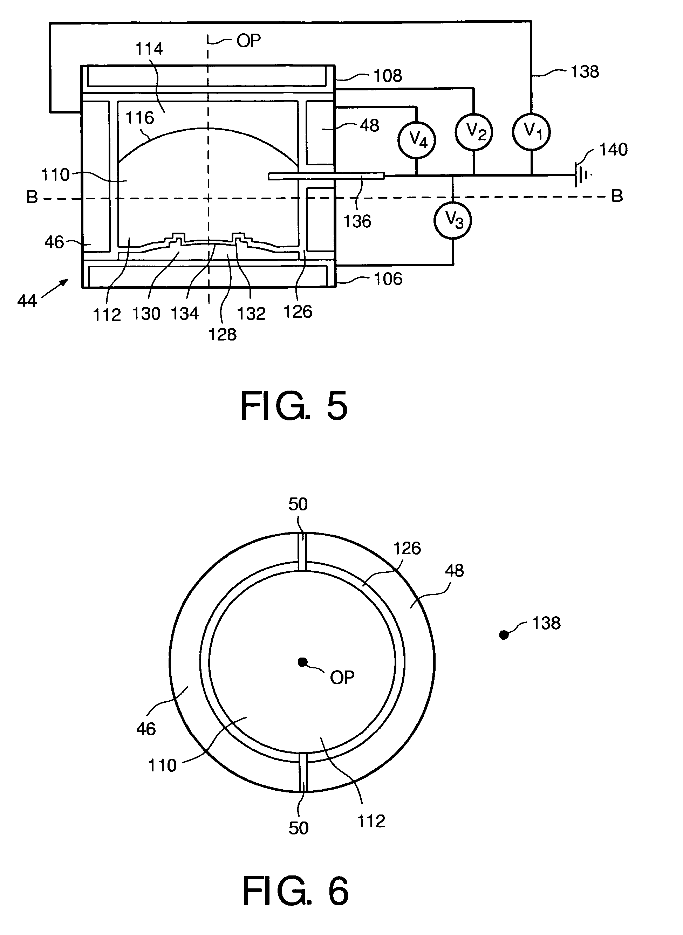

Figures 5, 6 and 7 show an optical switchable element 44 of the present invention in accordance with a different embodiment. Features described in accordance with this embodiment are similar to those described in accordance with the previous embodiment. Such features are referenced using the same reference numerals incremented by 100 and similar descriptions should be taken to apply here also.

Figure 5 shows the switchable optical element 44 in the first state and Figure 6 shows a cross-section of the element 44 taken along the line B---B indicated in Figure 5. In this embodiment there is no cylindrical electrode, as described for the previous embodiment. The chamber 110 is defined by the first and second walls 106, 108, a semi-cylindrical electrode 46 and a further semi-cylindrical electrode 48. The semi-cylindrical electrodes 46, 48 are aligned relatively to each other to form a cylinder. The first wall 106 and the second wall 108 cover a first end and a second end of this cylinder, respectively. The hydrophobic layer 126 covers an inner surface of this cylinder and an insulating layer 50 is located along longitudinal edges of the semi-cylindrical electrodes 46, 48 in order to separate and insulate the two semi-cylindrical electrodes 46, 48 from each other. This insulating layer 50 is, for example, formed of parylene, polyethylene, or Teflon^{™} 1600 produced by DuPont^{™}.

The semi-cylindrical electrode 46 is electrically connected to the first voltage source V₁. A fourth voltage source V₄ is electrically connected to the further semi-cylindrical electrode 48 and to the ground terminal 40. The ground electrode 136 is inserted through, and insulated from, the further semi-cylindrical electrode 48 in a similar manner to that described previously for the cylindrical electrode.

In this embodiment, with the element 44 in the first or the second state, the variable focus system determines the curvature of the fluid meniscus 116 by application of an appropriate voltage from the first voltage source V₁ to the semi-cylindrical electrode 46. The variable focus system also controls the fourth voltage source V₄ to apply a voltage, which is the same as the appropriate voltage applied by the first voltage source V₁, to the further semi-cylindrical electrode 48. In this way the curvature of the fluid meniscus 116 is determined and the curvature is rotationally symmetric about the optical path OP. In order to vary the curvature of the fluid meniscus 116, the voltage applied by the first voltage source V₁ to the semi-cylindrical electrode 46 and the voltage applied by the fourth voltage source V₄ to the further semi-cylindrical electrode 48, are varied in unison such that these two voltages remain identical to each other.

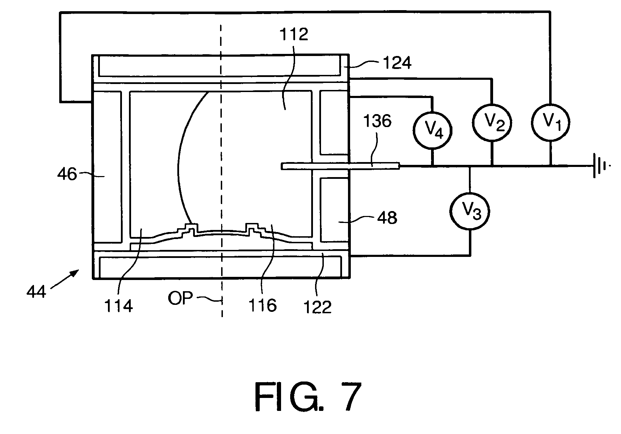

Figure 7 shows the switchable optical element 44 in an intermediate state during switching of the element 44 between the first state and the second state. In the intermediate state the first voltage source V₁, the second voltage source V₂ and the third voltage source V₃ do not apply a voltage to the semi-cylindrical electrode 46, the first switching electrode 122 and the second switching electrode 124, respectively. The fluid switching system controls the fourth voltage source V₄ to apply an appropriate voltage to the further semi-cylindrical electrode 48. This voltage applies electrowetting forces to the first and second fluids 112, 114 such that the first fluid 112 covers a portion of the hydrophobic layer 126 lying between the chamber 110 and the further semi-cylindrical electrode 48 and such that the first fluid 112 lies in contact with the ground electrode 136. The second fluid 114 covers a portion of the hydrophobic layer 126 lying between the chamber 110 and the semi-cylindrical electrode 46. Both the first wall part and the second wall parts are partially covered by the first fluid 112 and the second fluid 114.

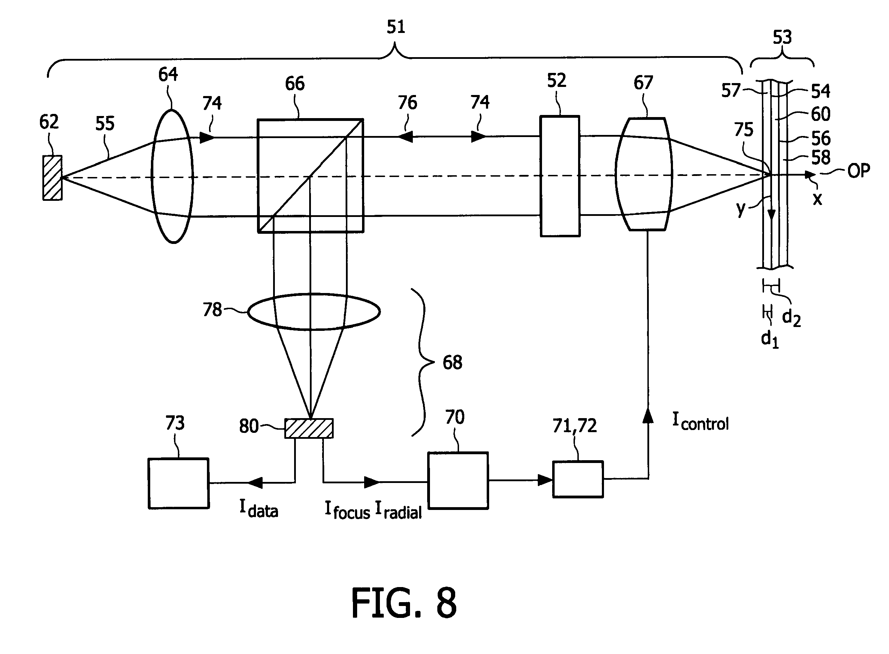

Figure 8 shows schematically an optical scanning device 51 including a switchable optical element 52 in accordance with an embodiment of the present invention. The optical scanning device can scan a first format, a second, different, format and a third, different, format of optical record carrier with a first radiation beam having a first predetermined wavelength λ₁, a second radiation beam having a second, different, predetermined wavelength λ₂, and a third radiation beam 55 having a third, different, predetermined wavelength λ₃, respectively. The third format of optical record carrier 53 is illustrated in Figure 8 and has a first information layer 54 and a second information layer 56 which are scanned by means of the third radiation beam 55. The third format of optical record carrier 53 includes a cover layer 57, formed for example of polycarbonate, on one side of which the first information layer 54 is arranged. The side of the second information layer 56 facing away from the cover layer 57 is protected from environmental influences by a further cover layer 58. The first information layer 54 and the second information layer 56 are separated by a separating layer 60. The cover layer 57 and/or the separating layer 60 act as a substrate for the third optical record carrier 53 by providing mechanical support for the first and second information layers 54, 56. The cover layer 57 may, alternatively, have the function of protecting the first information layer 54, while the mechanical support is provided by at least one of the separating layer 60, the second information layer 56 and the further cover layer 58. The first information layer 54 has a first information layer depth *d₁* within the record carrier, which corresponds to the thickness of the cover layer 57. The second information layer 56 has a second information layer depth *d₂* within the record carrier, which corresponds to the combined thickness of the cover layer 57 and the separating layer 60. The first and second formats of optical record carrier have at least one information layer lying at a different first information layer depth, which corresponds with the thickness of the cover layer of the first and second format of optical record carriers, respectively. The first information layer depth *d₁* of the third format of optical record carrier 53 is less than the first information layer depth of the second optical record carrier, which is less than the first information layer depth of the first optical record carrier.

The first information layer 54 and the second information layer 56 are surfaces of the third optical record carrier 53. Similarly the first information layer of the first and second formats of optical record carrier, are surfaces. Each of these surfaces contains at least one track, i.e. a path to be followed by the spot of a focused radiation on which path optically-readable marks are arranged to represent information. The marks may be, e.g., in the form of pits or areas with a reflection coefficient or a direction of magnetisation different from the surroundings. In the case where the third format of optical record carrier 53 has the shape of a disc, the following is defined with respect to a given track: the "radial direction" is the direction of a reference axis, the X-axis, between the track and the centre of the disc and the "tangential direction" is the direction of another axis, the Y-axis, that is tangential to the track and perpendicular to the X-axis. In this embodiment the first format of optical record carrier is a compact disc (CD) and the first information layer depth is approximately 1.2mm, the second format of optical record carrier is a conventional digital versatile disc (DVD) and the first information layer depth is approximately 0.6mm, and the third format of optical record carrier 3 is a Blu-ray^{™} disc (BD) and the first information layer depth *d₁* is approximately 0.075 mm. The second information layer depth *d₂* of the third format of optical record carrier 53 is approximately 0.1mm.

As shown in Figure 8, the optical scanning device 51 has an optical path OP and includes a radiation source system 62, a collimator lens 64, a beam splitter 66, an objective lens system comprising the switchable optical element 52 and an objective lens 67, and a detection system 68. Furthermore, the optical scanning device 51 includes a servo circuit 70, a focus actuator 71, a radial actuator 72, and an information processing unit 73 for error correction.

The radiation source system 62 is arranged for consecutively or simultaneously producing the first radiation beam, the second radiation beam and/or the third, different, radiation beam 55. For example, the radiation source system 62 may comprise either a tunable semiconductor laser for consecutively supplying the radiation beams or three semiconductor lasers for simultaneously or consecutively supplying these radiation beams. In this embodiment the third wavelength λ₃ is shorter than the second wavelength λ₂. The second wavelength λ₂ is shorter than the first wavelength λ₁. In this embodiment the first, second and third wavelength λ₁, λ₂, λ₃, respectively, is within the range of approximately 770 to 810 nm for λ₁, 640 to 680nm for λ₂, 400 to 420nm for λ₃ and preferably approximately 785nm, 650nm and 405nm, respectively. The first, second and third radiation beams have a numerical aperture (NA) of approximately 0.5, 0.65 and 0.85 respectively.

The collimator lens 64 is arranged on the optical path OP for transforming the third radiation beam 55 into a third substantially collimated beam 74. Similarly, it transforms the first and second radiation beams into a first substantially collimated beam and a second substantially collimated beam (not illustrated in Figure 8).

The beam splitter 66 is arranged for transmitting the first, second and third collimated radiation beams toward the objective lens system. Preferably, the beam splitter 66 is formed with a plane parallel plate that is tilted with an angle β with respect to the optical path OP and, preferably, β = 45°.

The objective lens system is arranged to focus the first, second and third collimated radiation beams to a desired focal point on the first, second and third optical record carriers, respectively. The desired focal point for the first, second and third radiation beams is a first, second and third scanning spot 75, respectively. Each scanning spot corresponds to a position on the first information layer of the appropriate optical record carrier or in the case of the third format 53, alternatively a position on the second information layer 56. Each scanning spot is preferably substantially diffraction limited and has a wave front aberration, which is less than 70mλ.

The switchable optical element 52 in accordance with this embodiment may have the form of the embodiment described in relation to Figures 1 to 4, or the form of the embodiment described in Figures 5 to 7. In this embodiment the wavefront modifier 28; 128 comprises the aspherical lens 30; 130 and the NPS 32; 132. The wavefront modifier 28; 128 has specific dimensions which introduce a different predetermined wavefront modification into the first radiation beam and into the second radiation beam. The wavefront modifier 28; 128 is formed of hexanediol diacrylate (HDDA) and the part of the hydrophobic layer 26; 126 which covers the wavefront modifier surface 34; 134 has a thickness which is smaller than the first, second and third wavelength λ₁, λ₂, λ₃ so that the hydrophobic layer 26; 126 does not modify the wavefront of the first, second and third radiation beams. The first fluid 12; 112 is salted water and the second fluid 14; 114 is oil. The oil has the same, or at least approximately the same, refractive index for a radiation beam having a predetermined wavelength of 408nm as the refractive index of the material of the wavefront modifier 28; 128. The radius r of the chamber 10; 110 is approximately 5 mm.

The objective lens 67 has a NA of approximately 0.85 and is optimised to focus a radiation beam having a predetermined wavelength of approximately 405nm onto an information layer lying at a depth of approximately 0.1 mm within an optical record carrier.

During scanning, and with the switchable optical element 52 in the second state, the third optical record carrier 53 rotates on a spindle (not illustrated in Figure 8) and the first information layer 54 is then scanned through the cover layer 57. The focused third radiation beam 74 reflects on the first information layer 54, thereby forming a reflected third radiation beam which returns on the optical path OP of the forward converging focused third radiation beam provided by the objective lens system. The objective lens system transforms the reflected third radiation beam to a reflected collimated third radiation beam 76. The beam splitter 66 separates the forward third radiation beam 74 from the reflected third radiation beam by transmitting at least a part of the reflected third radiation beam 76 towards the detection system 68.

The detection system 68 includes a convergent lens 78 and a quadrant detector 80 which are arranged for capturing said part of the reflected third radiation beam 76 and converting it to one or more electrical signals. One of the signals is an information signal I_{data}, the value of which represents the information scanned on the information layer 54. The information signal I_{data} is processed by the information processing unit 73 for error correction. Other signals from the detection system 68 are a focus error signal I_{focus} and a radial tracking error signal I_{radial}. The signal I_{focus} represents the axial difference in height along the optical path OP between the third scanning spot 75 and the position of the first information layer 54. Preferably, this signal is formed by the stigmatic method" which is known from, inter alia, the book by G. Bouwhuis, J. Braat, A. Huijser et al, entitled "Principles of Optical Disc Systems," pp.75-80 (Adam Hilger 1985) (ISBN 0-85274-785-3). A device for creating an astigmatism according to this focusing method is not illustrated. The radial tracking error signal I_{radial} represents the distance in the XY-plane of the first information layer 54 between the first scanning spot 75 and the center of a track in the information layer 54 to be followed by the first scanning spot 75. Preferably, this signal is formed from the "radial push-pull method" which is known from, inter alia, the book by G. Bouwhuis, pp.70-73.

The servo circuit 70 is arranged for, in response to the signals I_{focus} and I_{radial}, providing servo control signals I_{control} for controlling the focus actuator 71 and the radial actuator 72, respectively. The focus actuator 71 controls the position of a lens of the objective lens system along the optical path OP, thereby controlling the position of the scanning spot 75 such that it coincides substantially with the plane of the first information layer 54. The radial actuator 72 controls the position of the objective lens 67 of the objective lens system along the X-axis, thereby controlling the radial position of the scanning spot 75 such that it coincides substantially with the centre line of the track to be followed in the first information layer 54.

When scanning the first information layer 54 of the third format of optical record carrier 53, the switchable optical element 52 is in the second state and the variable focus system controls the fluid meniscus 216 so that the curvature is convex when viewed from the second wall 208 and has a curvature of approximately 0.02mm⁻¹. The variable focus system can vary the curvature of the fluid meniscus 16; 116 to a planar curvature of 0.00mm¹ in order to move the scanning spot 75 of the third radiation beam 74 from the first information layer 54 onto the second information layer 56.

When scanning the first format of record carrier and the second format of record carrier using the first and second radiation beam, respectively, the switchable optical element 52 is switched into the first state and the variable focus system controls the fluid meniscus 16; 116 so that the curvature is planar.

When scanning the first information layer of any of the formats of optical record carrier the cover layer introduces an amount of spherical aberration into the radiation beam scanning the optical record carrier. When scanning the second information layer 56 of the third format of record carrier 53, the cover layer 57 and the separating layer 60 introduce an amount of spherical aberration into the third radiation beam 74.

When scanning the first information layer of one of the formats of optical record carrier, the objective lens system introduces an amount of spherical aberration, into the radiation beam, which has an opposite sign and which is of approximately the same amount as the amount of spherical aberration introduced by the cover layer. When scanning the second information layer 56 of the third format of optical record carrier 53 the objective lens system introduces an amount of spherical aberration, into the third radiation beam 74, which has an opposite sign and which is of approximately the same amount as the amount of spherical aberration introduced by the cover layer 57 and the separating layer 60. Switching the switchable optical element 52 into the appropriate state and varying the curvature of the fluid meniscus 16; 116 determines the amount of spherical aberration introduced by the objective lens system and ensures that the radiation beam is focused accurately to the scanning spot. When scanning the first, second and third formats of optical record carrier, a root mean square (RMS) wavefront aberration of the scanning spot is approximately 13mλ, 9mλ and 15mλ, respectively.

The above embodiments are to be understood as illustrative examples of the invention. Further embodiments of the invention are envisaged. For example, in further embodiments where it is desired for the switchable optical element to introduce a different wavefront modification into a radiation beam of a same or a different predetermined wavelength to those described previously, the refractive index of the first and second fluids, the refractive index of the material of the wavefront modifier, the structure of the non-planar wavefront modifier, materials of the switchable optical element, a volume of the first and the second fluids and dimensions of the switchable optical element such as the radius of the chamber or a thickness or configuration of the first and/or the second wall parts, may be different to those described above.

In the embodiments of the present invention described, the second fluid has a refractive index, which is the same as the refractive index of the material of the wavefront modifier. In further embodiments the material of the wavefront modifier may alternatively have a refractive index which is different to the refractive index of the first and the second fluid. It is further envisaged that at least one of the fluids may be a gas, instead of being a liquid.

In further embodiments, in addition to the first wall part including a wavefront modifier, the second wall part may also include a non-planar wavefront modifier, which includes, for example, at least one of an aspherical lens, a non-periodic phase structure and a periodic phase structure.

In further embodiments the electrodes for switching the state of the element and/or for varying the curvature of the fluid meniscus, may be arranged according to a different configuration, or may have different shapes. For example, the first switching electrode may alternatively be arranged across the surface of the wavefront modifier. In further embodiments the switchable optical element may have a configuration of electrodes without the ground electrode. In such embodiments a voltage is applied to at least two of the electrodes of the element in order to position the first and second fluids as desired. For example, for the element described previously with reference to Figures 5 to 7, but without the ground electrode, the element may be switched from the first state, where a voltage is applied to the first switching electrode and to each of the semi-cylindrical electrodes, to the second state, where a voltage is applied to the second switching electrode and to both of the semi-cylindrical electrodes, by applying a voltage to both the first switching electrode and the further semi-cylindrical electrode and then by applying a voltage to both the second switching electrode and the further semi-cylindrical electrode. In this way the first fluid and second fluid are moved within the chamber. The magnitude of the applied voltages is relatively higher than that of the applied voltages described for previous embodiments and the first fluid adopts a voltage with a magnitude less than that of the applied voltages, for example, approximately half the magnitude.

It is further envisaged that the fluid switching system and/or the variable focus system may apply different types of forces, which are not electrowetting forces, to the fluids in order to switch the state of the element and to vary the curvature of the fluid meniscus, respectively. In different embodiments where a variable focus of a radiation beam is not desired, the switchable optical element does not include the variable focus system described. In such embodiments, the element may be arranged to provide a fixed focus to a radiation beam.

In previously described embodiments it has been described that convex, concave and planar curvatures of the fluid meniscus are obtainable, all of which are rotationally symmetric about the optical path OP. In further embodiments, curvatures of the fluid meniscus may be achieved which are not rotationally symmetric about the optical path OP.

In further embodiments of the present invention, the element may have a conduit which is fluidly connected to the chamber, or the element may comprise two concentric cylinders, which facilitate movement of the first and the second fluids within the element during switching of the state of the element

The switchable optical element is described as being included within an optical scanning device for scanning three formats of optical record carrier, one format having two information layers. In further embodiments the switchable optical element may be adapted such that, when included within an optical scanning device and by switching the states of the switchable optical element, the optical scanning device can scan different formats of optical record carrier, which may include CD, DVD or Blu-Ray^{™} and which may have one or a plurality of information layers. By varying the curvature of the fluid meniscus, it is envisaged that different information layers can be scanned of a record carrier having a plurality of information layers.

## Claims

1. A switchable optical element having an optical path (OP) for a radiation beam and having a first state and a second state, said element comprising:
a) a first fluid (12; 112) and a second, different, fluid (14; 114) which are immiscible and which are separated from each other by a fluid meniscus (16; 116);
b) a first, transparent, wall part (6; 106) and a second, transparent, wall part (8; 108) spaced from each other along the optical path; and
c) a fluid switching system which is arranged to apply forces to said first and/or said second fluid in order to switch said element between said first and said second state,
wherein the first wall part includes a non-planar wavefront modifier (28; 128), and wherein the fluid switching system is arranged to apply said forces so that:
when the element is in the first state, said first wall part is covered by the first fluid (12; 112); and
when the element is in the second state, said first wall part is covered by the second fluid (14; 114),
**characterised in that** when the element is in the first state said second wall part is covered by the second fluid, and when the element is in the second state said second wall part is covered by the first fluid, wherein in both the first state and the second state at least part of said fluid meniscus (16; 116) is located on the optical path.

2. A switchable optical element according to claim 1, wherein said first fluid is a liquid which is electrically conductive and said second fluid is a liquid which is either electrically insulative or which has a lower electrical conductivity than said first fluid.

3. A switchable optical element according to claim 1 or 2, wherein when the element is in at least one of the first and the second state, said fluid meniscus is capable of being arranged to focus a radiation beam travelling along the optical path.

4. A switchable optical element according to claim 3, wherein when said element is in at least one of the first and the second state, said fluid meniscus has a curvature which determines an amount of said focus and said element comprises a variable focus system capable of varying the curvature of the fluid meniscus.

5. A switchable optical element according to claim 4, wherein said variable focus system is arranged to vary said curvature using electrowetting forces.

6. A switchable optical element according to any preceding claim, wherein said fluid switching system includes a first and a second switching electrode (22, 24; 122, 124), wherein
said fluid switching system is arranged to apply a voltage to said first switching electrode in order to switch said element to said first state, and wherein
said fluid switching system is arranged to apply a voltage to said second switching electrode in order to switch said element to said second state.

7. A switchable optical element according to claim 4 or 5, and claim 6, wherein said optical element includes a further electrode (48), wherein
when switching between the first state and the second state, said fluid switching system is arranged to apply a voltage to said further electrode, and wherein
when varying the curvature of the fluid meniscus, said variable focus system is arranged to apply a voltage to said further electrode.

8. A switchable optical element according to any preceding claim, wherein said forces applied to the first and/or the second fluid by the fluid switching system are electrowetting forces.

9. A switchable optical element according to any preceding claim, wherein said non-planar wavefront modifier includes at least one of: an aspherical lens (30); a phase structure having a periodic profile; and a phase structure having a non-periodic profile (32).

10. A switchable optical element according to any preceding claim, wherein said first fluid has a first refractive index and said second fluid has a second, different, refractive index, wherein said non-planar wavefront modifier is formed of a material having a refractive index which is approximately the same as said second refractive index.

11. An optical scanning device for scanning a record carrier (53) having an information layer (54, 56), wherein said optical scanning device comprises:
a) a switchable optical element (52) in accordance with any of claims 1 to 10;
b) a radiation beam source system (62) arranged to provide a radiation beam (55) having a predetermined wavelength;
c) an objective lens system arranged to focus said provided radiation beam to a scanning spot (75) on said information layer; and
d) a detection system (68) arranged to detect the radiation beam after scanning of the information layer and to convert radiation of the detected radiation beam into electrical signals.

12. An optical scanning device according to claim 11, wherein the record carrier has a plurality of information layers (54, 56) lying at different depths (d₁, d₂) within the record carrier, wherein said variable focus system is arranged to vary the curvature of the fluid meniscus in order to move the scanning spot on one of said plurality of information layers to a different one of said plurality of information layers.

13. An optical scanning device according to claim 11 or 12, wherein said radiation beam source system is arranged to provide a first radiation beam of a first predetermined wavelength, a second radiation beam of a second, different, predetermined wavelength and a third radiation beam of a third, different, predetermined wavelength, wherein:
when said switchable optical element is in said first state, the optical scanning device is arranged to scan a record carrier of a first format with said first radiation beam and to scan a record carrier of a second, different, format with said second radiation beam; and
when said switchable optical element is in said second state, the optical scanning device is arranged to scan a record carrier of a third, different, format with said third radiation beam.

## Patentansprüche

1. Schaltbares optisches Element, das einen Strahlengang (OP) für ein Strahlenbündel und einen ersten Zustand und einen zweiten Zustand hat, wobei das Element Folgendes umfasst:
a) eine erste Flüssigkeit (12, 112) und eine zweite, andere Flüssigkeit (14, 114), die miteinander nicht mischbar und durch einen Flüssigkeitsmeniskus (16, 116) voneinander getrennt sind,
b) einen ersten transparenten Wandteil (6, 106) und einen zweiten transparenten Wandteil (8, 108), die entlang des Strahlengangs voneinander getrennt sind, und
c) ein Flüssigkeitsschaltsystem, das eingerichtet ist, um Kräfte an die erste und/oder zweite Flüssigkeit anzulegen, um das Element zwischen dem ersten und zweiten Zustand umzuschalten,
wobei der erste Wandteil einen nicht planaren Wellenfrontmodifikator (28, 128) enthält und wobei das Flüssigkeitsschaltsystem eingerichtet ist, um Kräfte anzulegen, sodass:
wenn sich das Element im ersten Zustand befindet, der erste Wandteil von der ersten Flüssigkeit (12, 112) bedeckt ist, und
wenn sich das Element im zweiten Zustand befindet, der erste Wandteil von der zweiten Flüssigkeit (14, 114) bedeckt ist,
**dadurch gekennzeichnet, dass**, wenn sich das Element im ersten Zustand befindet, der zweite Wandteil von der zweiten Flüssigkeit bedeckt ist, und wenn sich das Element im zweiten Zustand befindet, der zweite Wandteil von der ersten Flüssigkeit bedeckt ist, wobei sich sowohl im ersten Zustand als auch im zweiten Zustand mindestens ein Teil des Flüssigkeitsmeniskus (16, 116) im Strahlengang befindet.

2. Schaltbares optisches Element nach Anspruch 1, bei dem die erste Flüssigkeit eine Flüssigkeit ist, die elektrisch leitend ist, und die zweite Flüssigkeit eine Flüssigkeit ist, die entweder elektrisch isolierend ist oder eine geringere elektrische Leitfähigkeit als die erste Flüssigkeit hat.

3. Schaltbares optisches Element nach Anspruch 1 oder 2, bei dem, wenn sich das Element in mindestens einem des ersten und des zweiten Zustands befindet, der Flüssigkeitsmeniskus eingerichtet werden kann, um ein den Strahlengang durchlaufendes Strahlenbündel zu fokussieren.

4. Schaltbares optisches Element nach Anspruch 3, bei dem, wenn sich das Element in mindestens einem des ersten und des zweiten Zustands befindet, der Flüssigkeitsmeniskus eine Krümmung hat, die ein Maß des Brennpunkts bestimmt und das Element ein System mit variablem Brennpunkt umfasst, das die Krümmung des Flüssigkeitsmeniskus variieren kann.

5. Schaltbares optisches Element nach Anspruch 4, bei dem das System mit variablem Brennpunkt eingerichtet ist, um die Krümmung mittels Elektrobenetzungskräften zu variieren.

6. Schaltbares optisches Element nach einem der vorhergehenden Ansprüche, bei dem das Flüssigkeitsschaltsystem eine erste und eine zweite Schaltelektrode (22, 24, 122, 124) enthält, wobei
das Flüssigkeitsschaltsystem eingerichtet ist, eine Spannung an die erste Schaltelektrode anzulegen, um das Element in den ersten Zustand zu schalten, und wobei
das Flüssigkeitsschaltsystem eingerichtet ist, eine Spannung an die zweite Schaltelektrode anzulegen, um das Element in den zweiten Zustand zu schalten.

7. Schaltbares optisches Element nach Anspruch 4 oder 5 und Anspruch 6, bei dem das optische Element eine weitere Elektrode (48) enthält, wobei,
beim Umschalten zwischen dem ersten Zustand und dem zweiten Zustand das Flüssigkeitsschaltsystem eingerichtet ist, eine Spannung an die weitere Elektrode anzulegen, und wobei
beim Variieren der Krümmung des Flüssigkeitsmeniskus das System mit variablem Brennpunkt eingerichtet ist, eine Spannung an die weitere Elektrode anzulegen.

8. Schaltbares optisches Element nach einem der vorhergehenden Ansprüche, bei dem die durch das Flüssigkeitsschaltsystem an die erste und/oder die zweite Flüssigkeit angelegten Kräfte Elektrobenetzungskräfte sind.

9. Schaltbares optisches Element nach einem der vorhergehenden Ansprüche, bei dem der nicht planare Wellenfrontmodifikator mindestens eines der Folgenden enthält: eine asphärische Linse (30), eine Phasenstruktur mit einem periodischen Profil und eine Phasenstruktur mit einem nicht periodischen Profil (32).

10. Schaltbares optisches Element nach einem der vorhergehenden Ansprüche, bei dem die erste Flüssigkeit einen ersten Brechungsindex und die zweite Flüssigkeit einen zweiten, anderen Brechungsindex hat, wobei der nicht planare Wellenfrontmodifikator aus einem Material mit einem Brechungsindex gebildet ist, der ungefähr dem zweiten Brechungsindex entspricht.

11. Optische Abtasteinrichtung zum Abtasten eines Aufzeichnungsträgers (53) mit einer Informationsschicht (54, 56), wobei die optische Abtasteinrichtung Folgendes umfasst:
a) ein schaltbares optisches Element (52) gemäß einem der Ansprüche 1 bis 10,
b) ein Strahlenbündelquellensystem, das eingerichtet ist, ein Strahlenbündel (55) mit einer vorgegebenen Wellenlänge bereitzustellen,
c) ein Objektivlinsensystem, das eingerichtet ist, das bereitgestellte Strahlenbündel auf einen Abtastpunkt (75) auf der Informationsschicht zu fokussieren, und
d) ein Detektionssystem (68), das eingerichtet ist, das Strahlenbündel nach dem Abtasten der Informationsschicht zu detektieren und Strahlung des detektierten Strahlenbündels in elektrische Signale umzuwandeln.

12. Optische Abtasteinrichtung nach Anspruch 11, wobei der Aufzeichnungsträger eine Vielzahl von Informationsschichten (54, 56) hat, die in unterschiedlichen Tiefen (*d₁, d₂*) im Aufzeichnungsträger liegen, und wobei das System mit variablem Brennpunkt eingerichtet ist, die Krümmung des Flüssigkeitsmeniskus zu variieren, um den Abtastpunkt auf einer Schicht der Vielzahl von Informationsschichten zu einer anderen Schicht der Vielzahl von Informationsschichten zu bewegen.

13. Optische Abtasteinrichtung nach Anspruch 11 oder 12, bei der das Strahlenquellensystem eingerichtet ist, ein erstes Strahlenbündel einer ersten vorgegebenen Wellenlänge, ein zweites Strahlenbündel einer zweiten, anderen vorgegebenen Wellenlänge und ein drittes Strahlenbündel einer dritten, anderen vorgegebenen Wellenlänge bereitzustellen, wobei:
wenn sich das schaltbare optische Element im ersten Zustand befindet, die optische Abtasteinrichtung eingerichtet ist, einen Aufzeichnungsträger eines ersten Formats mit dem ersten Strahlenbündel abzutasten und einen Aufzeichnungsträger eines zweiten, anderen Formats mit dem zweiten Strahlenbündel abzutasten, und
wenn sich das schaltbare optische Element im zweiten Zustand befindet, die optische Abtasteinrichtung eingerichtet ist, einen Aufzeichnungsträger eines dritten, anderen Formats mit dem dritten Strahlenbündel abzutasten.

## Revendications

1. Elément optique commutable, comportant un chemin optique (OP) pour un faisceau de rayonnement et présentant un premier état et un deuxième état, ledit élément comprenant :
a) un premier fluide (12 ; 112) et un deuxième fluide différent (14 ; 114) qui sont immiscibles et qui sont séparés l'un de l'autre par un ménisque de fluide (16 ; 116) ;
b) une première partie de paroi transparente (6 ; 106) et une deuxième partie de paroi transparente (8 ; 108), espacées l'une de l'autre le long du chemin optique ; et
c) un système de commutation de fluide qui est agencé pour appliquer des forces audit premier fluide et/ou audit deuxième fluide afin de commuter ledit élément entre ledit premier état et ledit deuxième état ;
dans lequel la première partie de paroi comprend un modificateur de front d'onde non planaire (28 ; 128), et dans lequel le système de commutation de fluide est agencé pour appliquer lesdites forces de sorte que :
lorsque l'élément se trouve dans le premier état, ladite première partie de paroi est recouverte par le premier fluide (12 ; 112) ; et
lorsque l'élément est dans le deuxième état, ladite première partie de paroi est recouverte par le deuxième fluide (14 ; 114),
**caractérisé en ce que**, quand l'élément se trouve dans le premier état, ladite deuxième partie de paroi est recouverte par le deuxième fluide, et quand l'élément se trouve dans le deuxième état, ladite deuxième partie de paroi est recouverte par le premier fluide, dans lequel aussi bien dans le premier état que dans le deuxième état au moins une partie dudit ménisque de fluide (16 ; 116) est située sur le chemin optique.

2. Elément optique commutable selon la revendication 1, dans lequel ledit premier fluide est un liquide qui est électriquement conducteur et ledit deuxième fluide est un liquide qui est électriquement isolant ou qui présente une conductivité électrique inférieure audit premier fluide.

3. Elément optique commutable selon la revendication 1 ou 2, dans lequel, quand l'élément se trouve dans au moins l'un du premier et du deuxième état, ledit ménisque de fluide est capable d'être agencé pour focaliser un faisceau de rayonnement se déplaçant le long du chemin optique.

4. Elément optique commutable selon la revendication 3, dans lequel, quand ledit élément se trouve dans au moins l'un du premier et du deuxième état, ledit ménisque de fluide présente une courbure qui détermine une quantité de ladite focale et ledit élément comprend un système à focale variable capable de faire varier la courbure du ménisque de fluide.

5. Elément optique commutable selon la revendication 4, dans lequel ledit système à focale variable est agencé pour faire varier ladite courbure en utilisant des forces d'électromouillage.

6. Elément optique commutable selon l'une quelconque des revendications précédentes, dans lequel ledit système de commutation de fluide comprend une première et une deuxième électrode de commutation (22, 24 ; 122, 124), dans lequel
ledit système de commutation de fluide est agencé pour appliquer une tension à ladite première électrode de commutation afin de commuter ledit élément sur ledit premier état, et dans lequel
ledit système de commutation de fluide est agencé pour appliquer une tension à ladite deuxième électrode de commutation afin de commuter ledit élément sur ledit deuxième état.

7. Elément optique commutable selon la revendication 4 ou 5, et selon la revendication 6, dans lequel ledit élément optique comprend une électrode supplémentaire (48), dans lequel
lors de la commutation entre le premier état et le deuxième état, ledit système de commutation de fluide est agencé pour appliquer une tension à ladite électrode supplémentaire, et dans lequel
lors de la variation de la courbure du ménisque de fluide, ledit système à focale variable est agencé pour appliquer une tension à ladite électrode supplémentaire.

8. Elément optique commutable selon l'une quelconque des revendications précédentes, dans lequel lesdites forces appliquées au premier et/ou au deuxième fluide par le système de commutation de fluide sont des forces d'électromouillage.

9. Elément optique commutable selon l'une quelconque des revendications précédentes, dans lequel ledit modificateur de front d'onde non planaire comprend au moins l'une parmi : une lentille asphérique (30) ; une structure de phase ayant un profil périodique ; et une structure de phase ayant un profil non périodique (32).

10. Elément optique commutable selon l'une quelconque des revendications précédentes, dans lequel ledit premier fluide présente un premier indice de réfraction et ledit deuxième fluide présente un deuxième indice de réfraction différent, dans lequel ledit modificateur de front d'onde non planaire est formé à partir d'un matériau ayant un indice de réfraction qui est approximativement le même que ledit deuxième indice de réfraction.

11. Dispositif de balayage optique pour balayer un support d'enregistrement (53) comportant une couche d'informations (54, 56), dans lequel ledit dispositif de balayage optique comprend :
a) un élément optique commutable (52) selon l'une quelconque des revendications précédentes 1 à 10 ;
b) un système de source de faisceau de rayonnement (62) agencé pour fournir un faisceau de rayonnement (55) ayant une longueur d'onde prédéterminée ;
c) un système de lentilles d'objectif agencé pour focaliser ledit faisceau de rayonnement fourni sur un spot de balayage (75) sur ladite couche d'informations ; et
d) un système de détection (68) agencé pour détecter le faisceau de rayonnement après le balayage de la couche d'informations et pour convertir le rayonnement du faisceau de rayonnement détecté en signaux électriques.

12. Dispositif de balayage optique selon la revendication 11, dans lequel le support d'enregistrement présente une pluralité de couches d'informations (54, 56) situées à différentes profondeurs (d₁, d₂) à l'intérieur du support d'enregistrement, dans lequel ledit système à focale variable est agencé pour faire varier la courbure du ménisque de fluide afin de déplacer le spot de balayage sur l'une de ladite pluralité de couches d'informations vers une couche différente de ladite pluralité de couches d'informations.

13. Dispositif de balayage optique selon la revendication 11 ou 12, dans lequel ledit système de source de faisceau de rayonnement est agencé pour fournir un premier faisceau de rayonnement d'une première longueur d'onde prédéterminée, un deuxième faisceau de rayonnement d'une deuxième longueur d'onde prédéterminée différente et un troisième faisceau de rayonnement d'une troisième longueur d'onde prédéterminée différente, dans lequel :
lorsque ledit élément optique commutable se trouve dans ledit premier état, le dispositif de balayage optique est agencé pour balayer un support d'enregistrement d'un premier format avec ledit premier faisceau de rayonnement et pour balayer un support d'enregistrement d'un deuxième format différent avec ledit deuxième faisceau de rayonnement ; et
lorsque ledit élément optique commutable se trouve dans ledit deuxième état, le dispositif de balayage optique est agencé pour balayer un support d'enregistrement d'un troisième format différent avec ledit troisième faisceau de rayonnement.
